Europäisches Patentamt

European Patent Office

Office européen des brevets

(11) Veröffentlichungsnummer: **0 167 849**
**B1** .

(12) **EUROPÄISCHE PATENTSCHRIFT**

(45) Veröffentlichungstag der Patentschrift: **24.10.90**

(21) Anmeldenummer: **85107115.9**

(22) Anmeldetag: **10.06.85**

(51) Int. Cl.⁵: **H 04 J 3/06, H 04 B 7/185, H 03 M 13/00, H 04 L 27/10**

(54) **Digitales Signalübertragungssystem, insbesondere für Satelliten-Rundfunk.**

(30) Priorität: **07.07.84 DE 3425069**

(43) Veröffentlichungstag der Anmeldung:
**15.01.86 Patentblatt 86/03**

(45) Bekanntmachung des Hinweises auf die
Patenterteilung:
**24.10.90 Patentblatt 90/43**

(84) Benannte Vertragsstaaten:
**AT BE CH DE FR GB IT LI LU NL SE**

(56) Entgegenhaltungen:
**EP-A-0 058 417**
**EP-A-0 098 388**
**US-A-4 370 648**

(73) Patentinhaber: **TELEFUNKEN Fernseh und
Rundfunk GmbH
Göttinger Chaussee 76
D-3000 Hannover 91 (DE)**

(72) Erfinder: **Klank, Otto, Dipl.-Ing.
Allensteiner Strasse 12
D-3160 Lehrte-Arpke 12 (DE)**
Erfinder: **Rottmann, Dieter
Girlitzpark 20
D-3000 Hannover 61 (DE)**

(74) Vertreter: **Einsel, Robert, Dipl.-Ing.
TELEFUNKEN Fernseh und Rundfunk GmbH
Göttinger Chaussee 76
D-3000 Hannover 91 (DE)**

**Beschreibung**

Die Erfindung betrifft ein digitales Signalübertragungssystem gemäß dem Oberbegriff des Patentanspruchs 1. Ein vergleichbarer Stand der Technik ist aus US—A—4 370 643 entnehmbar.

Beim Satelliten-Rundfunk sind digital codierte Übertragungsprinzipien wie kohärente oder Differenz-4PSK-Modulation bekannt. Nachteil der kohärenten 4PSK-Modulation ist die Mehdeutigkeit bei der Demodulation. Nachteil dert Differenz-4PSK-Modulation ist das Auftreten von Doppelfehlern. Bei der Differenz-4PSK-Demodulation werden jedoch im Gegensatz zur kohärenten 4PSK-Demodulation korrekt gepolte Bitströme erkannt. Es kann jedoch zu einer Unischerheit über die Kanalzuordnung kommen, wenn frequenzumsetzende Mischstufen verwandt werden, bei denen die Mischeroszillatorfrequenz größer als die Nutzfrequenz ist. Es kommt zu einer Spektrumsumkehr des empfangenen Signals, wenn eine ungeradzahlige Anzahl von Mischerstufen mit einer Mischeroszillatorfrequenz größer als die Nutzfrequenz verwendet werden.

Aufgabe der Erfindung ist es, unabhängig von der Anzahl der verwendeten Mischerstufen und der Größe der Mischeroszillatorfrequenzen eine eindeutige Zuordnung der zwei simultanen Übertragungskanäle zu den zugehörigen Teilrahmen zu erreichen.

Diese Aufgabe wird durch die im Anspruch 1 beschriebene Erfindung gelöst. Vorteilhafte Weiterbildungen der Erfindung sind in den Unteransprüchen beschrieben.

Bei der erfindungsgemäßen Lösung werden für die beiden Übertragungskanäle unterschiedliche Synchronworte verwendet, nach denen während einer Rahmenlänge gesucht wird. Da bei der Differenz-4PSK-Demodulation zwei Bitströme mit korrekter Polung erzeugt werden, die jedoch noch vertauscht sein können, kann nach zumindest einem Suchvorgang auf die Lage der ankommenden Teilrahmen geschlossen werden und diese, gegebenenfalls vertauscht, den nachfolgenden Verarbeitungsschaltungen zugeführt werden.

Ein Ausführungsbeispiel der Erfindung wird anhand der Zeichnung erläutert. Darin zeigen:

Fig. 1 zeigt ein Blockschaltbild eines 4-PSK-Empfängers,

Fig. 2 eine Synchronwortdekodierschaltung mit Kanalumschalter,

Fig. 3 eine weitere Synchronwortdekodierschaltung.

Die folgende Tabelle verdeutlicht die Mehrdeutigkeit der kohärenten und der Differenz-4PSK-Demodulation. Die ersten vier Ausgangssignale entstehen bei einer beliebigen Anzahl von Mischerstufe auf der genannten Übertragungsstrecke, die entweder keine Spektrumsumkehrung verursachen oder eine geradzahlige Anzahl von spektrumsumkehrenden Mischerstufen enthalten. Die zweiten vier Ausgangssignale entstehen bei einer ungeradzahligen Anzahl spektrumsumkehrender Mischerstufen.

| Übertragung | Einrastzustand des Oszillators | Relative Phasenlage am Demodul. | Ausgangssignale bei | |
|---|---|---|---|---|
| | | | kohärente Demodulat. I Q | Differenz-demodulat. I Q |
| Fall 1 Spektrum Normallage | $\varphi_0 = 0$ | $I, Q$ | $A \quad B$ | $A \quad B$ |
| | $\varphi_0 = \frac{\pi}{2}$ | $I, Q$ | $\bar{B} \quad A$ | |
| | $\varphi_0 = \pi$ | $Q, I$ | $\bar{A} \quad \bar{B}$ | |
| | $\varphi_0 = \frac{3}{2}\pi$ | $I, Q$ | $B \quad \bar{A}$ | |
| Fall 2 Spektrum invers | $\varphi_0 = 0$ | $Q, I$ | $B \quad A$ | $B \quad A$ |
| | $\varphi_0 = \frac{\pi}{2}$ | $Q, J$ | $\bar{A} \quad B$ | |
| | $\varphi_0 = \pi$ | $I, Q$ | $\bar{B} \quad \bar{A}$ | |
| | $\varphi_0 = \frac{3}{2}\pi$ | $Q, I$ | $A \quad \bar{B}$ | |

Als Synchronwort wird für den ersten Teilrahmen A ein Barkercodewort mit der Bitsequenz "111 0001 0010" verwendet. Für den zweiten Teilrahmen B wird dieses Synchronwort invertiert mit der Bitsequenz "000 1110 1101" verwendet.

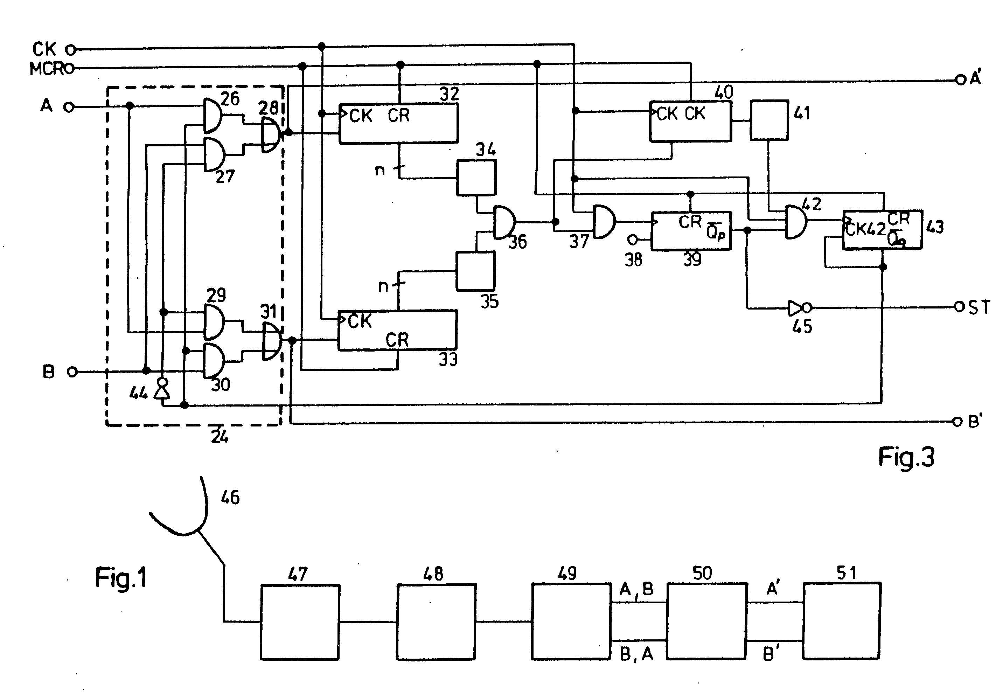

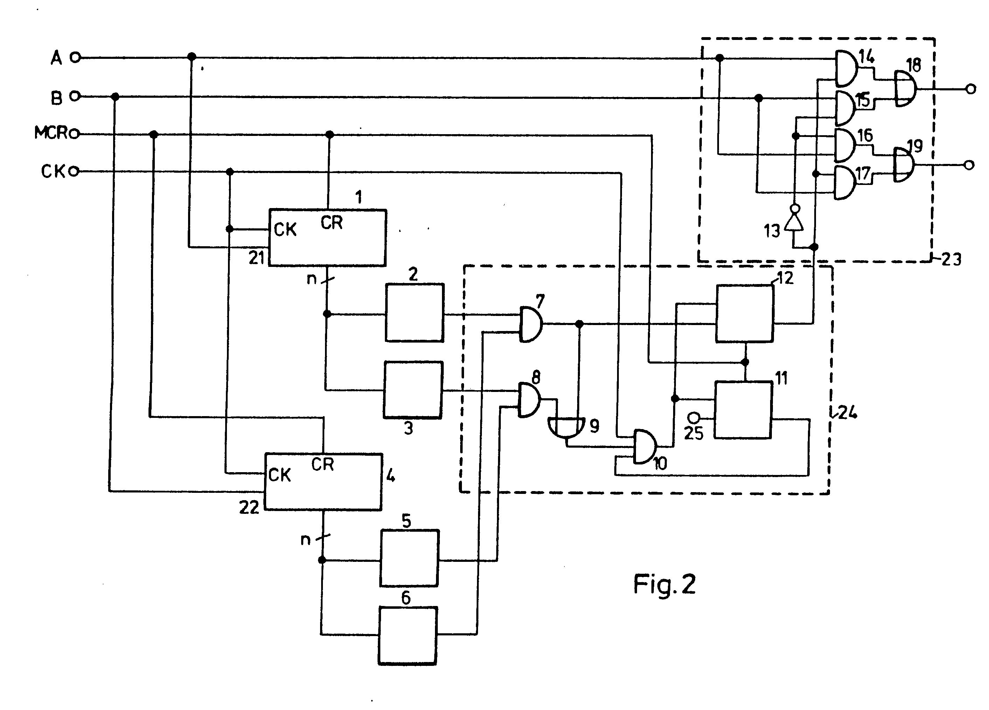

Fig. 1 zeigt eine Prinzipschaltung eines 4-PSK-Empfängers. Ein 4-PSK moduliertes HF-Signal wird über eine Antenne 46 einem Frequenzumsetzer 47 zugeführt. Daran schließt sich ein ZF-Verstärker 48 an, dessen Ausgangssignal einem 4-PSK-Demodulator 49 zugeführt wird. Hier kann die o.a. Mehrdeutigkeit der Ausgangssignale auftreten. Eine nachfolgende Korrekturschaltung 50 beseitigt diese Mehrdeutigkeit. Beispielsschaltungen sind in Fig. 2 und Fig. 3 beschrieben. Daran schließen sich digitale Signalverarbeitungsstufen 51 für die beiden simultanen Übertragungskanäle A', B' an.

Fig. 2 zeigt einen Synchronwortdetektorschaltung mit einem Kanalumschalter 23. Die Teilrahmen A, B werden den Eingängen 21, 22 je eines der n-stufigen Schieberegister 1, 4 zugeführt, wobei die Länge der Schieberegister 1, 4 mit der Länge der Synchronworte übereinstimmen. Zu Beginn des Suchvorganges werden die Schieberegister 1, 4 sowie zwei D-Flip-Flops 11, 12 durch einen Impuls MCR zurückgesetzt. Die Schieberegister 1, 4 haben n Ausgangsleitungen. Die n Ausgangsleitungen des Schieberegisters 1 bzw. 4 sind parallel mit Dekoderschaltungen 2, 3 bzw. 5, 6 verbunden. Die Dekoderschaltungen 2 und 5 untersuchen die die Schieberegister 1, 4 durchlaufenden Teilrahmen A, B auf das erste Synchronwort und die Dekoderschaltungen 3 und 6 auf das zweite Synchronwort. Sobald die beiden zeitgleich auftretenden Synchronworte gefunden sind, wirden entweder ein Gatter 7 oder ein Gatter 8 durchgesteuert. Der Ausgang von Gatter 7 und 8 ist über Gatter 9, 10 mit den Takteingängen CK10 der D-Flip-Flops 11, 12 verbunden. Der invertierende Ausgang $\overline{Q}$ des D-Flip-Flops 11 und der Takt CK sind mit weiteren Eingängen des Gatters 10 verbunden. Hat keine Vertauschung der Teilrahmen A, B stattgefunden, wird das Ausgangssignal vom Gatter 7 vom D-Flip-Flop 12 mit dem nächsten Takt CK übernommen. Das D-Flip-Flop 12 wird gesetzt und schaltet mit seiner Ausgangsinformation logisch "1" den Teilrahmen A über Gatter 14, 18 und den Teilrahmen B über Gatter 17, 19 auf die Ausgänge A', B' eines Kanalumschalters 23 durch.

Werden die Teilrahmen A, B vertauscht detektiert, so wird das D-Flip-Flop 12 nicht gesetzt. Es gelangt ein High-Impuls von Gatter 8 über Gatter 9 an einen Eingang des Gatters 10. Der Eingang 25 des D-Flip-Flops 11 ist fest mit logisch "1" verdrahtet. Sein invertierter Ausgang $\overline{Q}$ liegt zu Beginn des Suchvorgangs auf logisch "1". Beim nächsten Taktimpuls CK wird das Gatter 10 durchgesteuert und das D-Flip-Flop 11 gesetzt. Am Ausgang $\overline{Q}$ des D-Flip-Flops 11 liegt somit eine logische "0" an, die das Gatter 10 bleibend sperrt.

Das D-Flip-Flop 12 wird durch den Zählimpuls CK10 zur Übernahme des Pegels von Gatter 7 veranlaßt, so daß dem Ausgang des D-Flip-Flops 12 eine logische "0" anliegt. Über einen Inverter 13 werden nun Gatter 15, 18 bzw. 16, 19 durchgeschaltet. Der Teilrahmen A gelangt auf den Ausgang B' des Kanalumschalters 23, der Teilrahmen B auf den Ausgang A'.

Fig. 3 zeigt eine weitere Synchronwortdekodierschaltung mit Kanalumschalter 24. Beim Einschalten des Empfängers werden durch einen Impuls MCR Schieberegister 32, 33, 39, 43 und ein Zähler 40 zurückgesetzt. Der Teilrahmen A wird je einem Eingang der Gatter 26, 29, der Teilrahmen B je einem Eingang der Gatter 27, 30 zugeführt. Der andere Eingang der Gatter 26, 30 ist mit einem Ausgang $\overline{Q}_q$ eines q-stufigen Schieberegisters 43, vorzugsweise mit q = 1, der andere Eingang der Gatter 27, 29 über einen Inverter 44 mit diesem Ausgang $\overline{Q}_q$ verbunden. Da das Schieberegister 43 zu Anfang durch den Impuls MCR zurückgesetzt wurde, liegt am Ausgang $\overline{Q}_q$ des Schieberegisters 43 logisch "1" an. Das Gatter 26 ist für den Teilrahmen A, das Gatter 30 für den Teilrahmen B geöffnet. Die Teilrahmen A, B werden weiter über ein Gatter 28, 31 einem Ausgang A', B' und dem Schieberegister 32, 33 zugeführt. Diese n bit langen Schieberegister 32, 33, deren Stellenzahl der Synchronworte entspricht, haben n Ausgangsleitungen, die Dekodern 34, 35 zugeführt werden, wobei der Dekoder 34 das Synchronwort des Teilrahmens A und der Dekoder 35 das Synchronwort des Teilrahmens B dekodiert.

Sobald die Decoder 34, 35 ein Synchronwort gefunden haben, wird ihr Ausgang logisch "1". Wird in beiden Teilrahmen A, B gleichzeitig ein Synchronwort gefunden, schaltet ein Gatter 36 durch und lädt bei dem nächsten auftretenden Takt CK einen Zähler 40 mit einem vorbestimmten Wert, vorzugsweise "0". Weiter wird über ein Gatter 37, dessen anderer Eingang it dem Takt CK verbunden ist, das Schieberegister 39, vorzugsweise ein zweistufiges, mit einem Wert logisch "1" geladen. Der Eingang 38 des Schieberegisters 39 ist fest auf logisch "1" gelegt. Der invertierte Ausgang $\overline{Q}_p$ des Schieberegisters 39 ist zu Anfang des Suchvorganges auf logisch "1". Der Ausgang des Zahlers 40 ist mit einem Decoder 41 verbunden, der einen Zählerstand delektiert, der mindestens 3 Takte nach dem Ladeimpuls liegt.

Mit der Detektierung des Zählerstandes des Zählers 40 wird das Gatter 42 durch das Ausgangssignal des Dekoders 41 durchgeschaltet und das rückgekoppelte Schieberegister 43 geladen. Dadurch wird der invertierte Ausgang $\overline{Q}_q$ des Schieberegisters 43 logisch "0". Der Inverter 44 bewirkt ein Umschalten der Teilrahmen A, B auf die Eingänge der Gatter 27, 29. Das Synchronwort des Teilrahmens B wird jetzt im Decoder 34, das Synchronwort des Teilrahmens A im Decoder 35 decodiert. Wird kein Synchronwort gefunden, wird nach einer Rahmenlänge, z.B. 320 Takte, vom Decoder 41 eine logische "1" geliefert und über das rückgekoppelte Schieberegister 43 wieder ein Umschaltbefehl gegeben. Durch diese Prüfung, die mehrfach vorgenommen werden kann, wird die richtige Zuordnung der ankommenden Teilrahmen A, B zu den weiterverarbeitenden Schaltungsteilen 51 gefunden.

Tritt während der Prüfung in beiden Teilrahmen gleichzeitig ein weiteresmal ein Synchronwort auf, wird das Schieberegister 39 wieder mit dem Wert logisch "1" geladen. Nach der Länge dieses Schiebe-

# EP 0 167 849 B1

registers 39 richtet sich die Anzahl der Prüfungen. Ist das am Eingang 38 anliegende Signal durch die mehrfache erfolgreiche Prüfung durch das Schieberegister 39 zum Ausgang $\overline{Q}_p$ geschoben, wird das Gatter 42 auf Dauer gesperrt. Gleichzeitig liegt am Ausgang ST über einem Inverter 45 ein Steuersignal an, das die nachfolgende Schaltung 51 veranlaßt, die Halbrahmen A, B, die auf die Ausgänge A', B' durchgeschaltet sind, weiter zu verarbeiten.

Zur Bitstromanpassung der Teilrahmen A, B an den Umschaltprozeß können Verzögerungsglieder eingefügt werden. Beispielsweise können dafür andere Ausgänge der Schieberegister 1, 4; 32, 33 verwendet werden.

## Patentansprüche

1. Digitales Signalübertragungssystem, insbesondere für Satelliten-Rundfunk, bei dem über zwei simultane Übertragungskanäle (I, Q) jeweils innerhalb eines Teilrahmens (A, B) Datenfolgen zeitlich nacheinander und zu Beginn eines Teilrahmens (A, B) ein Synchronwort mit mehreren Bit übertragen werden, bei dem die Teilrahmen (A, B) gegenüber den Übertragungskanälen (I, Q), verursacht durch verschiedene Lösungswege in der Auf- und/oder Abwärtsmischung der D-PSK-modulierten HF-Signale, vertauscht auftreten können, gekennzeichnet dadurch, das Mittel derart vorgesehen sind, daß für den ersten Teilrahmen (A) ein erstes Synchronwort und für den zweiten Teilrahmen (B) ein anderes Synchronwort verwendet wird, daß im Empfänger bei einem Suchvorgang mit einer Synchronwortdekodierschaltung (1, 2, 3; 4, 5, 6) ein die Kanalzugehörigkeit kennzeichnendes Steuersignal erzeugt wird und daß ein Kanalumschalter (23; 24) vorgesehen ist, über den die Teilrahmen (A, B) den zugehörigen nachfolgenden Digitalen Signalverarbeitungsstufen zugeführt werden.

2. Digitales Signalübertragungssystem nach Anspruch 1, dadurch gekennzeichnet, daß als erstes Synchronwort ein Barkercodewort mit der Bitfolge "111 0001 0010" verwendet wird.

3. Digitales Signalübertragungssystem nach Anspruch 1, dadurch gekennzeichnet, daß als zweites Synchronwort ein invertiertes Barkercodewort mit der Bitfolge "000 1110 1101" verwendet wird.

4. Digitales Signalübertragungssystem nach einem oder mehreren der vorangehenden Ansprüche, dadurch gekennzeichnet, daß jeder Teilrahmen (A, B) je zwei Dekodern (2, 3; 5, 6) zugeführt wird.

5. Digitales Signalübertragungssystem nach Anspruch 4, dadurch gekennzeichnet, daß ein erster Dekoder (2, 5) nach dem ersten Synchronwort und der andere Dekoder (3, 6) nach dem anderen Synchronwort dekodiert.

6. Digitales Signalübertragungssystem nach Anspruch 5, dadurch gekennzeichnet, daß in einem Speicher (12) das Dekodierergebnis festgehalten wird und daß der Ausgang des Speichers (12) die Kanalumschaltstufe (23) steuert.

7. Digitales Signalübertragungssystem nach Anspruch 6, dadurch gekennzeichnet, daß der Speicher (12) bei zeitgleichem Auftreten von Synchronworten an den Dekodereingängen gesetzt wird.

8. Digitales Signalübertragungssystem nach Anspruch 7, dadurch gekennzeichnet, daß gleichzeitig mit Abspeicherung des Dekodierergebnisses in dem Speicher (12) ein weiterer Speicher (11) mit einem festen Wert (25) geladen wird, und daß der Ausgang dieses Speichers (11) über ein Tor (10) eine weitere Umschaltung verhindert.

9. Digitales Signalübertragungssystem nach einem oder mehreren der Ansprüche 1—3, dadurch gekennzeichnet, daß dem Kanalumschalter (24) die beiden Teilrahmen (A, B) zugeführt werden und sich an diesen eine Detektierschaltung für die Synchronworter anschließt.

10. Digitales Signalübertragungssystem nach Anspruch 9, dadurch gekennzeichnet, daß für jedes Synchronwort nur ein Dekoder (34, 35) vorhanden ist und daß jeder Dekoder (34, 35) über die Ausgänge je eines mit je einem Ausgang des Kanalumschalters (24) verbundenen Schieberegisters (32, 33) verbunden ist.

11. Digitales Signalübertragungssystem nach Anspruch 10, dadurch gekennzeichnet, daß ein Zähler (40) und ein Schieberegister (39) mit Auftreten des Dekodierergebnisses beider Dekoder (34, 35) bei zeitgleichem Auftreten der Synchronworte beider Teilrahmen (A, B) und deren richtiger Zuordnung zu den Ausgängen (A', B') geladen werden.

12. Digitales Signalübertragungssystem nach Anspruch 11, dadurch gekennzeichnet, daß das Zählergebnis des Zählers (40) maximal m ist, wobei m mit der Rahmenlänge eines Teilrahmens (A, B) übereinstimmt.

13. Digitales Signalübertragungssystem nach Anspruch 12, dadurch gekennzeichnet, daß ein sich an den Zähler (40) anschließender Dekoder (41) einen bestimmten Zählerstand dekodiert, der einen Abstand zum Ladewert des Zählers (40) aufweist.

14. Digitales Signalübertragungssystem nach Anspruch 13, dadurch gekennzeichnet, daß der Abstand vom Ladewert des Zählers (40) mindestens 3 ist.

15. Digitales Signalübertragungssystem nach Anspruch 14, dadurch gekennzeichnet, daß das Ausgangssignal des Dekoders (41) über ein Tor (42), das mit dem Ausgang des Schieberegisters (39) verbunden ist, ein rückgekoppeltes q-bit Schieberegister (43) taktet.

16. Digitales Signalübertragungssystem nach Anspruch 15, dadurch gekennzeichnet, daß das Schieberegister (43) den Kanalumschalter (24) steuert.

4

17. Digitales Signalübertragungssystem nach Anspruch 16, dadurch gekennzeichnet, daß das Ausgangssignal des Schieberegisters (39) nach mindestens zwei Eingangstakten das Tor (42) sperrt und eine weitere Umschaltung des Umschalters (24) verhindert.

**Revendications**

1. Système numérique de transmission de signaux, en particulier pour la radiodiffusion par satellite, dans lequel il est transmis par deux canaux de transmission simultanés (I, Q) respectivement à l'intérieur d'une trame (A, B) des séquences de données successivement dans le temps et un mot de synchronisation avec plusieurs bits au début d'une trame (A, B), les trames (A, B) pouvant apparaître en étant permutées par rapport aux canaux de transmission (I, Q), ceci étant causé par plusieurs solutions différentes du mélange élévateur et/ou abaisseur des signaux H.F. modulés par modulation différentielle par manipulation de déphasage, caractérisé en ce que des moyens sont prévus de telle manière qu'un premier mot de synchronisation est utilisé pour la première trame (A) et qu'un autre mot de synchronisation est utilisé pour la seconde trame (B), qu'un signal de commande, qui caractérise la correspondance avec un canal, est produit dans le récepteur lors d'une opération de recherche par un circuit de décodage de mot de synchronisation (1, 2, 3; 4, 5, 6) et qu'il est prévu un commutateur de canaux (23; 24) par lequel les trames (A, B) sont amenées aux étages de traitement numérique de signaux suivants correspondants.

2. Système numérique de transmission de signaux selon la revendication 1, caractérisé en ce qu'un mot code de Barker avec la séquence de bits "111 0001 0010" est utilisé comme premier mot de synchronisation.

3. Système numérique de transmission de signaux selon la revendication 1, caractérisé en ce qu'un mot code de Barker inversé avec la séquence de bits "000 1110 1101" est utilisé comme second mot de synchronisation.

4. Système numérique de transmission de signaux selon l'une ou plusieurs des revendications précédentes, caractérisé en ce que chaque trame (A, B) est amenée à respectivement deux décodeurs (2, 3; 5, 6).

5. Système numérique de transmission de signaux selon la revendication 4, caractérisé en ce qu'un premier décodeur (2, 5) décode selon la premier mot de synchronisation et que l'autre décoder (3, 6) décode selon l'autre mot de synchronisation.

6. Système numérique de transmission de signaux selon la revendication 5, caractérisé en ce que le résultat de décodage est fixé dans une mémoire (12) et que la sortie de la mémoire (12) commande l'étage de commutation de canal (23).

7. Système numérique de transmission de signaux selon la revendication 6, caractérisé en ce que la mémoire (12) est commutée, lorsque les mots de synchronisation apparaissent de manière synchrone, aux entrées des décodeurs.

8. Système numérique de transmission de signaux selon la revendication 7, caractérisé en ce que, simultanément avec la mémorisation du résultat de décodage dans la mémoire (12), une valeur fixe (25) est chargée dans une autre mémoire (11) et que la sortie de cette mémoire (11) empêche, par l'intermédiaire d'une porte (10), une autre commutation.

9. Système numérique de transmission de signaux selon l'une ou plusieurs des revendications 1 à 3, caractérisé en ce que les deux trames (A, B) sont conduites au commutateur de canaux (24) et qu'un circuit de détection des mots de synchronisation se rattache à celui-ci.

10. Système numérique de transmission de signaux selon la revendication 9, caractérisé en ce qu'un seul décodeur (34, 35) existe pour chaque mot de synchronisation et que chaque décodeur (34, 35) est relié par les sorties de respectivement un registre à décalage (32, 33) relié à respectivement une sortie du commutateur de canal (24).

11. Système numérique de transmission de signaux selon la revendication 10, caractérisé en ce qu'un compteur (40) et un registre à décalage (39) sont chargés lors de l'apparition du résultat de décodage des deux décodeurs (34, 55) lors de l'apparition synchrone des mots de synchronisation des deux trames (A, B) et de leur correspondance exacte avec les sorties (A', B').

12. Système numérique de transmission de signaux selon la revendication 11, caractérisé en ce que le résultat du compteur (40) est au maximum m, m coïncidant avec la longueur de trame d'une trame (A, B).

13. Système numérique de transmission de signaux selon la revendication 12, caractérisé en ce qu'un décodeur (41) se rattachant au compteur (40) décode une certaine position du compteur qui diffère de la valeur de charge du compteur (40).

14. Système numérique de transmission de signaux selon la revendication 13, caractérisé en ce que l'écart par rapport à la position de charge du compteur (40) est au moins 3.

15. Système numérique de transmission de signaux selon la revendication 14, caractérisé en ce que le signal de sortie de décodeur (41) synchronise un registre à décalage à boucle fermée (43) pour q bits par l'intermédiaire d'une porte reliée à la sortie du registre à décalage (39).

16. Système numérique de transmission de signaux selon la revendication 15, caractérisé en ce que le registre à décalage (43) commute le commutateur de canaux (24).

17. Système numérique de transmission de signaux selon la revendication 16, caractérisé en ce que le signal de sortie du registre à décalage (39) bloque la porte (42) après au moins deux cycles d'entrée et empêche une autre commutation du commutateur (24).

**Claims**

1. A digital signal transmission system, particularly for satellite broadcasting, wherein data sequences are transmitted successively in time over two simultaneous transmission channels (I, Q) within a subframe (A, B) in each case and at the beginning of a subframe (A, B), a synchronization word with a plurality of bits is transmitted, wherein the subframes (A, B) can appear transposed in relation to the transmission channels (I, Q) due to different approaches in the up-conversion and/or down-conversion of the D-PSK-modulated r.f. signals, characterised in that means are provided in such a manner that a first synchronization word is used for the first subframe (A) and another synchronization word is used for the second subframe (B), that, in the receiver, during a search operation with a synchronization word decoding circuit (1, 2, 3; 4, 5, 6), a control signal distinguishing the appurtenance to a channel is generated, and that a channel switch (23; 24) is provided via which the subframes (A, B) are fed to the appurtenant following digital signal processing stages.

2. A digital signal transmission system according to Claim 1, characterised in that a Barker code word with the bit sequence "111 0001 0010" is used as the first synchronization word.

3. A digital signal transmission system according to Claim 1, characterised in that an inverted Barker code word with the bit sequence "000 1110 1101" is used as the second synchronization word.

4. A digital signal transmission system according to one or more of the preceding Claims, characterised in that each subframe (A, B) is fed to each of two decoders (2, 3; 5, 6).

5. A digital signal transmission system according to Claim 4, characterised in that a first decoder (2, 5) decodes after the first synchronization word and the other decoder (3, 6) decodes after the other synchronization word.

6. A digital signal transmission system according to Claim 5, characterised in that the result of the decoding is kept in a store (12) and that the output of the store (12) controls the channel switching stage (23).

7. A digital signal transmission system according to Claim 6, characterised in that on the synchronous appearance of synchronization words at the decoder imputs, the store (12) is set.

8. A digital signal transmission system according to Claim 7, characterised in that simultaneously with the storage of the result of the decoding in the store (12), a further store (11) is loaded with a fixed value (25), and that, through a gate (10) the output of this store (11) prevents a further switching over.

9. A digital signal transmission system according to one or more of the Claims 1—3, characterised in that the two subframes (A, B) are fed to a channel switch (24) and this is followed by a detector circuit for the synchronization words.

10. A digital signal transmission system according to Claim 9, characterised in that there is only one decoder (34, 35) for each synchronization word, and that each decoder (34, 35) is connected via the output of a shift register (32, 33) each of which is connected to one output of the channel switch (24).

11. A digital signal transmission system according to Claim 10, characterised in that on the appearance of the results of the decoding of both decoders (34, 35) with synchronous appearance of the synchronization words of both subframes (A, B) and their correct assignment to the outputs (A', B'), a counter (40) and a shift register (39) are loaded.

12. A digital signal transmission system according to Claim 11, characterised in that the maximum counting result of the counter (40) is m, m coinciding with the frame length of a subframe (A, B).

13. A digital signal transmission system according to Claim 12, characterised in that a decoder (41) following on the counter (40) decodes a certain count which is different from the loading value of the counter (40).

14. A digital signal transmission system according to Claim 13, characterised in that the difference from the loading value of the counter (40) is at least 3.

15. A digital signal transmission system according to Claim 14, characterised in that the output signal of the decoder (41) clocks a fed-back q-bit shift register (43) via a gate (42) which is connected to the output of the shift register (39).

16. A digital signal transmission system according to Claim 15, characterised in that the shift register (43) controls the channel switch (24).

17. A digital signal transmission system according to Claim 16, characterised in that after at least two input clock pulses, the output signal of the shift register (39) inhibits the gate (42) and prevents a further switching over of the switch (24).

CK ○

MCR ○ ○ A'

A ○

26

28

32

>CK CR

n 34

29 31

>CK CR

33

n 35

B ○

44 30

24

36 37

38 39

CR $\overline{Q}_P$

40

CK CK 41

42

CK42 CR 43
$\overline{Q}_g$

45 ○ ST

○ B'

Fig.3

EP 0 167 849 B1

46

Fig.1

47 48 49 50 51

A,B A'

B,A B'

Fig.2

EP 0 167 849 B1